# EUROPÄISCHE PATENTSCHRIFT

(11) **EP 3 342 032 B1**
(45) Veröffentlichungstag und Bekanntmachung des Hinweises auf die Patenterteilung: **26.02.2020**
(21) Anmeldenummer: 16758125.5
(22) Anmeldetag: 22.08.2016
(51) Int. Cl.: H02K 41/03

(54) **PLANAR-POSITIONIERVORRICHTUNG UND POSITIONIERTISCH**
PLANAR POSITIONING APPARATUS AND POSITIONING TABLE
DISPOSITIF DE POSITIONNEMENT PLAN ET TABLE DE POSITIONNEMENT

(30) Priorität: 25.08.2015 DE 102015216199
(43) Veröffentlichungstag der Anmeldung: 04.07.2018
(73) Patentinhaber: Physik Instrumente (PI) GmbH & Co. KG, 76228 Karlsruhe (DE)
(72) Erfinder: GLÖSS, Rainer, 76228 Karlsruhe (DE)
(74) Vertreter: Kruspig, Volkmar
(86) Internationale Anmeldenummer: PCT/EP2016/069796
(87) Internationale Veröffentlichungsnummer: WO 2017/032738

(56) Entgegenhaltungen:
- WO-A1-2013/059934
- US-A1- 2007 035 267

## Beschreibung

Die Erfindung betrifft eine Planar-Positioniervorrichtung, mit einem Stator, der eine Spulenanordnung aus Flachspulen umfasst, einem in Betriebslage der Positioniervorrichtung dem Stator gegenüberliegend angeordneten Läufer, der eine planare Magnetanordnung aus mehreren Magnetreihen aufweist, wobei die durch die planare Magnetanordnung aufgespannte Ebene parallel zur Ebene der Spulenanordnung angeordnet ist, wenigstens einem in Betriebslage der Positioniervorrichtung innerhalb des Stators oder Läufers angeordneten Positionsmesskopf zur Erfassung der Lage des Läufers relativ zum Stator, einem positionstreu an dem Läufer oder an dem Stator fixierten Flächenmaßstab, und einer Auswertungs- und Steuereinrichtung zur Auswertung von Positionssignalen des Positionsmesskopfes und zur Steuerung einer Bestromung der Spulenanordnung zur Positionssteuerung des Läufers bezüglich des Stators, wobei der Stator oder der Läufer wenigstens ein Fenster zur Sichtbarmachung des Flächenmaßstabes für den Positionsmesskopf aufweist. Sie betrifft des Weiteren einen Positioniertisch, der eine derartige Positioniervorrichtung enthält, sowie eine mit einem solchen Positioniertisch ausgerüstete Bearbeitungs- oder Messanordnung.

Zahlreiche Typen von Werkzeugmaschinen oder anderen Bearbeitungs-oder Messanordnungen sind mit Positioniertischen, auch bezeichnet als Kreuztisch oder XY-Tisch, zur geeigneten Positionierung eines Werkstücks bezüglich eines Werkzeugs oder auch eines Messobjekts bezüglich einer Messeinrichtung ausgestattet. Fortgeschrittene Positioniertische dieser Art bieten nicht nur eine reine XY-Positionierung, sondern mehrachsige Positionierung, und werden in ihrer höchsten Entwicklungsstufe auch als 6D-Positionierer oder -Tische bezeichnet.

Während traditionelle XY- oder Kreuztische mit zwei Linearantrieben ausgestattet sind, gewinnen seit einiger Zeit Antriebskonzepte an praktischer Bedeutung, die auf Flachspulenanordnungen und Flächen-Arrays von Permanentmagneten auf Stator- bzw. Läuferseite basieren. Sogenannte "Flächenmotoren" oder Planarantriebe umfassen nur ein einzelnes Motor-Primärteil (Stator) und ein mit Permanentmagneten bestücktes Motor-Sekundärteil (Läufer), so dass ein zweiter Antriebsmotor ebenso entfällt wie zusätzliche mechanische Übertragungselemente, wie sie beispielsweise bei Kugelgewindetrieben benötigt werden.

Planar-Positioniervorrichtungen der genannten oder ähnlicher Art sind beispielsweise aus der US 6,452,292 B1, US 2007/0035267 A1, US 2006/0049699 A1, WO 2009/115071 A2 und WO 2013/0059934 A1 bekannt.

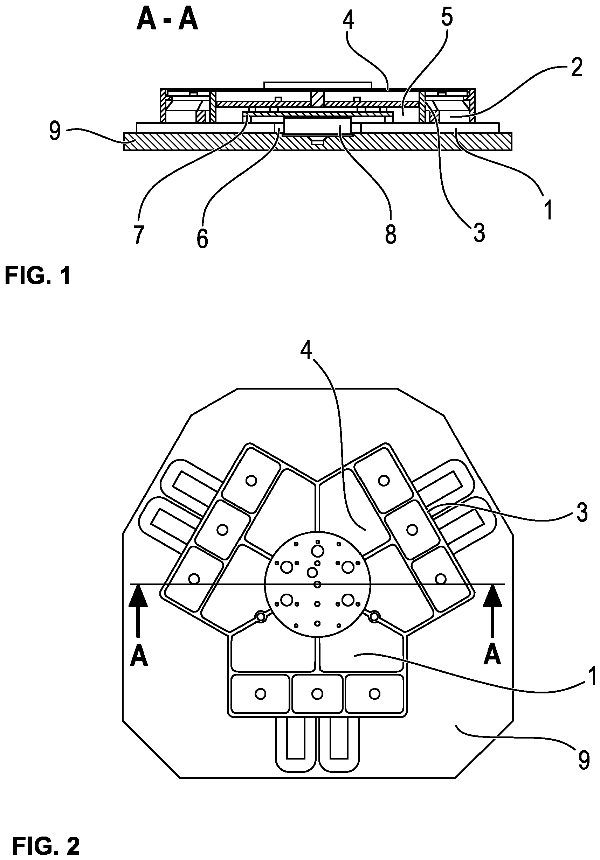

Auch die auf die Anmelderin zurückgehende DE 10 2011 100 153 A1 offenbart eine gattungsgemäße Planar-Positioniervorrichtung. Der Aufbau dieser Planer-Positioniervorrichtung ist in Fig. 1 und 2 schematisch gezeigt. Eine planare Spulenanordnung 1, die hier aus sechs Flachspulen besteht, die in drei Paaren sternförmig um jeweils 120° versetzt angeordnet sind, ist auf einer Statorplatte 9 angeordnet und befestigt. Im Zentrum der Spulenanordnung ist ein freigelassener Raum bzw. ein Fenster 6 belassen, in dem auf der Statorplatte ein Positionsmesskopf (6D-Messkopf) 8 angebracht ist. Über der Statorplatte 9 mit der Spulenanordnung 1 ist, dieser gegenüber bewegbar, ein Läufer 3 mit einer planaren Magnetanordnung 2 angeordnet, die aus drei Reihen von wechselseitig polarisierten Magneten gebildet ist, die in Mittellage des Läufers drei jeweils mittig zu einem Spulenpaar der Spulenanordnung 1 positioniert sind. Auch im Zentrum der Magnetanordnung 2 befindet sich ein Freiraum bzw. ein Fenster 5, der Platz für einen Flächenmaßstab 7 bietet, der im Zusammenwirken mit dem Positionsmesskopf 8 zur Positionsmessung des Läufers 3 relativ zum Stator 9 dient. Auf der Oberseite des Läufers 2 ist ein Objekt- bzw. Werkstückträger 4 angeordnet.

Aufgrund der Konzeption der Positionsensorik ist bei bekannten Planar-Positioniervorrichtungen der laterale Verfahrbereich relativ eingeschränkt.

Der Erfindung liegt daher die Aufgabe zugrunde, eine Planar-Positioniervorrichtung mit verbesserten Gebrauchseigenschaften, gemäß einem Aspekt der Erfindung speziell mit vergrößertem Verfahrbereichund höherer Stellkraft in Z-Richtung bei gleichzeitig anforderungsgerechter Präzision der Positionseinstellung, bereitzustellen.

Die Aufgabe wird gemäß einem ersten Aspekt der Erfindung durch eine Planar-Positioniervorrichtung gemäß den Merkmalen des Anspruches 1 gelöst. Gemäß einem relativ unabhängigen Aspekt der Erfindung wird weiterhin eine Planar-Positioniervorrichtung mit den Merkmalen des Anspruchs 9 bereitgestellt. Zweckmäßige Fortbildungen des Erfindungsgedankens sind Gegenstand der jeweiligen abhängigen Ansprüche. Es wird weiterhin ein vorteilhafter Positioniertisch vorgeschlagen.

Zum ersten Aspekt der Erfindung gehört der Gedanke, einen Flächenmaßstab vorzusehen, der sich über das Fenster im Stator (oder Läufer) hinaus zwischen die Spulen- und Magnetanordnung erstreckt und einen vergrößerten Positionserfassungsbereich für den Positionsmesskopf bietet. Ein weiterer Gedanke der Erfindung ist es, dass der Flächenmaßstab direkt auf mindestens einen Abschnitt der Magnetanordnung - oder alternativ der Spulenanordnung - aufgelegt ist. Dieser Flächenmaßstab ist, gemäß einem weiteren Gedanken der Erfindung, aus einem das Magnetfeld zwischen Stator und Läufer (genauer: zwischen den Flachspulen und den Permanentmagneten) nicht beeinflussenden Material gebildet, Gemäß einem weiteren Teilgedanken dieses Aspekts der Erfindung sind diesem vergrößerten Flächenmaßstab Haltemittel zur Gewährleistung einer über seine gesamte Erstreckung zum Läufer und Stator parallelen Konfiguration, ohne relevante Durchbiegung, Aufwölbung oder Welligkeit zugeordnet.

Gemäß einer Ausführung dieses Aspekts erstreckt der Flächenmaßstab sich mindestens über den größeren Teil der Fläche des Läufers oder Stators. Noch spezieller erstreckt der Flächenmaßstab sich über eine Vielzahl von Fenstern bzw. Beobachtungsöffnungen im Läufer oder Stator. Dies eröffnet, jedenfalls mit Hinblick auf die Positionssensorik, einen Verfahrbereich der Positioniervorrichtung, der im Wesentlichen den Abmessungen der Antriebskomponente Stator bzw. Läufer entspricht.

In einer weiteren Ausführung ist der Flächenmaßstab aus einem Material und mit einer Dicke gefertigt, die eine hohe Eigensteifigkeit gewährleistet. Grundsätzlich kommen hierbei neben Glas oder Keramik auch Metalle in Betracht, die nicht magnetisch und nicht magnetisierbar sind und das Magnetfeld zwischen Stator und Läufer nicht stören. In einer Ausgestaltung dieses Aspekts ist der Flächenmaßstab aus Glas, insbesondere gehärtetem Glas, oder einer Aluminiumlegierung großer Härte gefertigt.

In einer weiteren Ausgestaltung ist vorgesehen, dass der Flächenmaßstab eine Dicke zwischen 0,3 und 3 mm aufweist. Die im konkreten zu wählende Dicke wird natürlich von den Abmessungen der Positioniervorrichtung insgesamt und dem für den Flächenmaßstab verwendeten Material sowie den bestehenden Genauigkeitsanforderungen abhängen.

In einer weiteren Ausführung der Erfindung ist der Flächenmaßstab so am Läufer angebracht, dass er an Stegen abgestützt ist, die am Läufer zwischen Magnetreihen vorgesehen sind. In analoger Weise kann eine Abstützung des Flächenmaßstabs an entsprechenden Stegen oder Abstützungspunkten am Stator erfolgen, sofern die Anbringung des Flächenmaßstabs am Stator vorgesehen ist. Hierdurch lassen sich Aufwölbungen oder Welligkeiten zumindest in Richtung auf die jeweiligen Unterstützungspunkte oder -Linien am Läufer oder Stator weitestgehend vermeiden. Eine, insbesondere vordefiniert elastische, Verklebung an den Stegen bzw. Abstützungspunkten verbessert diese Wirkung noch.

Gemäß einer weiteren Ausführung weisen die Haltemittel eine Spanneinrichtung zum tangentialen Spannen des Flächenmaßstabs in beide Erstreckungsrichtungen des Läufers oder Stators auf. Derartige Spanneinrichtungen sind grundsätzlich bekannt; beispielsweise können in X- und Y-Richtung verschiebliche Spann- oder Klemmbacken diese Funktion realisieren.

Gemäß dem zweiten Aspekt basiert die Erfindung auf einer Läufer-Konfiguration mit schachbrettartiger Anordnung von Magnetreihen, bei der zwischen benachbarten Magnetreihen jeweils ein trennender Steg gebildet ist. Hierbei wird vorgeschlagen, dass die Magnetreihen und Stege derart konfiguriert sind, dass die üblicherweise einander schräg gegenüberliegenden Begrenzungskanten diagonal gegenüberliegender Magnetreihen miteinander fluchten. Hierdurch lässt sich die Konfiguration des zwischen Stator und Läufer aufgebauten Magnetfeldes optimieren.

Insbesondere ist vorgesehen, dass in der gleichen Richtung verlaufende, aneinander anschließende Begrenzungsstege jeweils einen seitlichen Versatz annähernd vom Betrag der Stegbreite haben.

Die Stege können einstückig mit dem Grundkörper des Läufers bzw. Positioniertisches gefertigt sein, beispielsweise indem sie beim Ausfräsen von Ausnehmungen für die Magnetanordnung stehen bleiben.

In einer an sich bekannten Konfiguration, die in vorteilhafter Weise die Realisierung von Drehbewegungen eines Werkstücks oder Messobjektes ermöglicht, weist der Läufer vier quadratische Magnetreihen in Schachbrettanordnung auf, und hierbei kreuzen sich die miteinander fluchtenden Begrenzungskanten der diagonal gegenüber liegenden Magnetfeldreihen in einem zentralen Kreuzungspunkt.

In einer weiteren Ausführung ist vorgesehen, dass die Magnetreihen den zentralen Bereich des Läufers im Wesentlichen bedecken. Dies ist allerdings kein erfindungsnotwendiges Merkmal, sondern die fluchtende Anordnung der Begrenzungskanten kann auch bei einer Ausführung des Läufers vorteilhaft sein, bei der dieser im zentralen Bereich ein Beobachtungsfenster für die Positionssensorik hat.

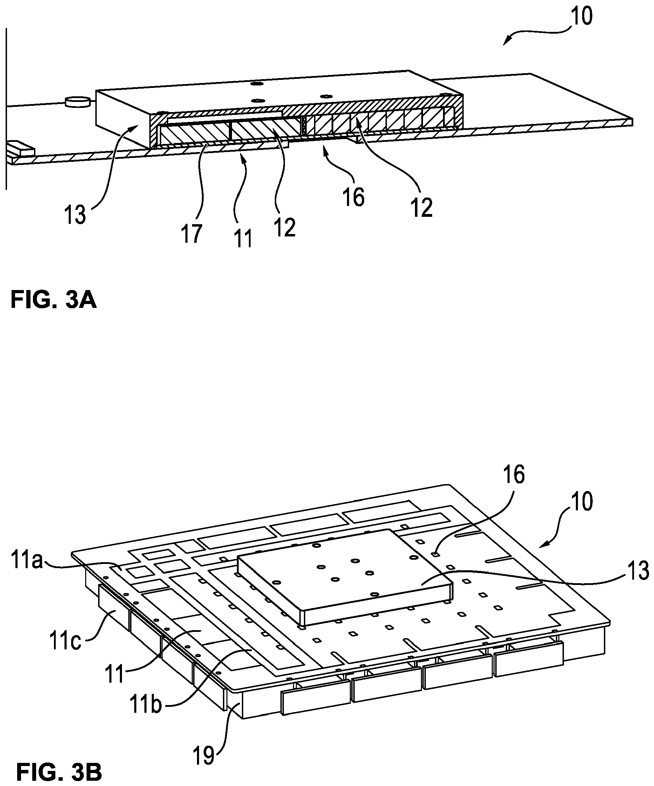

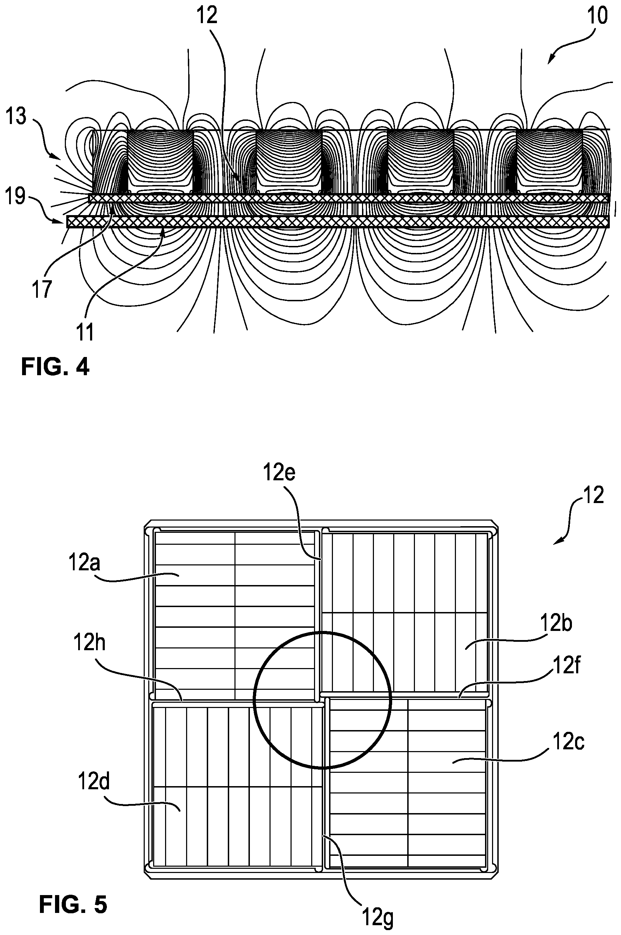

Vorteile und Zweckmäßigkeiten der Erfindung ergeben sich im Übrigen aus der nachfolgenden skizzenhaften Beschreibung von Ausführungsbeispielen anhand der Figuren. Von diesen zeigen:
Fig. 1 und 2 eine schematische Schnittdarstellung bzw. Draufsicht einer bekannten Planar-Positioniervorrichtung,
Fig. 3A bis 3D eine perspektivische Schnittansicht, eine perspektivische Gesamtansicht, eine perspektivische Schnittansicht und eine Explosionsdarstellung wesentlicher Teile von Planar-Positioniervorrichtungen gemäß Ausführungsformen der Erfindung,
Fig. 4 eine Teilschnittdarstellung der Planar-Positioniervorrichtung nach Fig. 3A mit Darstellung der magnetischen Feldlinien und
Fig. 5 eine Draufsicht einer planaren Magnetanordnung gemäß einer Ausführungsform der Erfindung, die bei den Planar-Positioniervorrichtungen nach Fig. 3A bis 3D und 4 eingesetzt werden kann.
Bei den in den Figuren 3A bis 3D und 4 gezeigten Ausführungsform einer erfindungsgemäßen Planar-Positioniervorrichtung 10 hat diese einen flach bauenden Stator (Grundkörper) 19 mit planarer Spulenanordnung 11, über der ein haubenartig konfigurierter Läufer/Positioniertisch 13 mit integrierter planarer Magnetanordnung (Halbach-Arrays) 12 angeordnet ist. Die Spulenanordnung 11 umfasst ein Drei-Phasen-System, aus dem in der Figur aus Übersichtlichkeitsgründen nur jeweils eine Spule 11a in X-Richtung und nur eine Spule 11b in Y-Richtung dargestellt sind, und ein Spulentreiberboard 11c. Während bei einer ersten Ausgestaltung (Fig. 3A) im Stator 19 mit der Spulenanordnung 11 wiederum, wie bei der weiter oben beschriebenen bekannten Anordnung, ein zentraler Freiraum bzw. ein Fenster 16 für einen (hier nicht gezeigten) Positionsmesskopf vorgesehen ist, und eine zweite Ausgestaltung (Fig. 3A bis 3D) eine reguläre Anordnung einer Vielzahl von Fenstern bzw. Beobachtungsöffnungen 16 aufweist, gibt es bei der Magnetanordnung 12 im Läufer/Positioniertisch 13 keinen solchen Freiraum bzw. kein solches Fenster. Die Magnetreihen erstrecken sich lückenlos bis ins Zentrum des Läufers.

Auf die Unterseite der planaren Magnetanordnung 12 im Läufer/Positioniertisch 13 ist ein sich über die gesamte Erstreckung des Läufers erstreckender Flächenmaßstab 17 aus Glas fest aufgesetzt. Vorzugsweise ist der Flächenmaßstab 17 an den Außenkanten des Läufers/Positioniertisches 13 mit einer in der Figur nicht dargestellten Spanneinrichtung in der XY-Ebene verspannt und/oder am Läufer elastisch angeklebt. Wie in der Teilansicht gemäß Fig. 4 deutlich wird, wird der Verlauf der Magnetfeldlinien zwischen der Spulenanordnung 11 und der Magnetanordnung 12 durch den dazwischen liegenden Flächenmaßstab 17 nicht gestört. Außer mit Glas lässt sich diese Wirkung auch mit anderen nicht metallischen Materialien oder auch mit nicht magnetischen und nicht magnetisierbaren Metallen erreichen, beispielsweise mit Keramik oder Aluminiumlegierungen, die auch wegen ihrer mechanischen Eigenschaften und der moderaten Kosten für die Ausführung des Flächenmaßstabes in Betracht kommen.

Fig. 5 zeigt eine Ausführung der Magnetanordnung 12 mit vier in ihrer Außenkontur quadratischen Magnetreihen 12a - 12d, zwischen denen Trennstege 12e - 12h vorgesehen sind. Wie weiter oben erwähnt, erstrecken sich die Magnetreihen bei dieser Ausführung der Planar-Positioniervorrichtung bis in deren Zentrum.

Um eine miteinander fluchtende Ausrichtung der üblicherweise einander schräg gegenüberliegenden Begrenzungskanten der diagonal gegenüber liegenden Magnetreihen 12a und 12c bzw. 12b und 12d zu erreichen, sind die Begrenzungsstege 12e und 12g bzw. 12f und 12h nicht miteinander fluchtend, sondern mit einem Versatz gegeneinander angeordnet, der annähernd der Stegbreite entspricht. Durch die miteinander fluchtende Anordnung der relevanten Begrenzungskanten der sich diagonal gegenüber liegenden Magnetreihen lässt sich eine Optimierung der Magnetfeldkonfiguration zwischen der planaren Magnetanordnung im Läufer und der planaren Spulenanordnung im Stator der Positioniervorrichtung erreichen. Die zur Erzeugung der Kräfte linear in der leiterplatte liegenden Spulen-Drähte überdecken somit lückenlos die diagonal erzeugten und aneinander angrenzenden Magnetfelder bzw. haben keinen Phasenversatz zwischen ihnen.

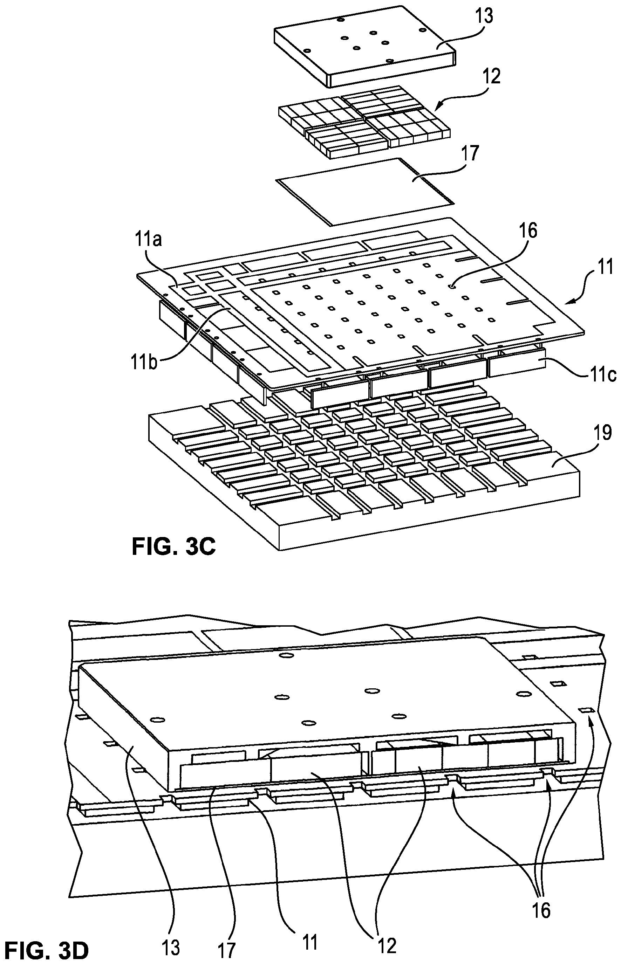

Die Stege 12e - 12h können im Übrigen in ihrer Höhe derart bemessen sein, dass sie zugleich als Auflagelinien für den gemäß Fig. 3 und 4 unterhalb der Magnetanordnung angebrachten Flächenmaßstab dienen und diesen so abstützen, dass ein Aufwölben in Richtung auf die Magnetanordnung oder eine Welligkeit, die Positionsmessungen verfälschen könnten, weitestgehend vermieden wird. Diese Wirkung lässt sich besonders Vorteilhaft im Zusammenspiel mit einer Spanneinrichtung sonstigen Haltemitteln an den Außenkanten des Läufers realisieren.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Planar-Positioniervorrichtung (10), mit
einem Stator (19), der eine Spulenanordnung (11) aus Flachspulen (11a, 11b) umfasst, einem in Betriebslage der Positioniervorrichtung dem Stator gegenüberliegend angeordneten Läufer (13), der eine planare Magnetanordnung (12) aus mehreren Magnetreihen aufweist, wobei die durch die planare Magnetanordnung aufgespannte Ebene parallel zur Ebene der Spulenanordnung angeordnet ist,
einem in Betriebslage der Positioniervorrichtung innerhalb des Stators oder des Läufers angeordneten Positionsmesskopf (8) zur Erfassung der Lage des Läufers relativ zum Stator,
einem positionstreu an dem Läufer oder an dem Stator fixierten Flächenmaßstab (17),
und eine Auswertungs- und Steuereinrichtung zur Auswertung von Positionssignalen des Positionsmesskopfes und zur Steuerung einer Bestromung der Spulenanordnung zur Positionssteuerung des Läufers bezüglich des Stators,
wobei der Stator oder der Läufer wenigstens ein Fenster (6, 16) zur Sichtbarmachung des Flächenmaßstabes für den Positionsmesskopf aufweist und sich der Flächenmaßstab über das Fenster hinaus zwischen die Spulen- und Magnetanordnung erstreckt,
wobei der Läufer eine schachbrettartige Anordnung von Feldern aus Magnetreihen (12a-12d) mit jeweils quadratischer Kontur und einheitlicher Polarisierung aller Magnete in einem Feld und wechselseitig zueinander senkrechter Polarisierung der benachbarten Felder umfasst und zwischen benachbarten Feldern jeweils ein trennender Steg (12e-12h) gebildet ist,
**dadurch gekennzeichnet, dass**
- zwei diagonal benachbart gegenüberliegende Magnetreihen derart gegenüber einander versetzt sind, dass
- zwei der in der gleichen Richtung verlaufenden gegenüberliegenden Begrenzungskanten miteinander fluchten,
- während die anderen zwei der in der gleichen Richtung verlaufenden gegenüberliegenden Begrenzungskanten einen Versatz von dem dreifachen Betrag der Stegbreite aufweisen, so dass zwei in der gleichen Richtung verlaufende, aneinander anschließende Begrenzungsstege immer einen seitlichen Versatz vom Betrag der Stegbreite haben.

2. Planar-Positioniervorrichtung nach Anspruch 1,
wobei der Läufer vier quadratische Magnetreihen in Schachbrettanordnung aufweist und die miteinander fluchtenden Begrenzungskanten sich in einem zentralen Kreuzungspunkt schneiden.

3. Planar-Positioniervorrichtung nach einem der Ansprüche 1 bis 3, wobei die Magnetreihen den zentralen Bereich des Läufers im Wesentlichen bedecken.

4. Planar-Positioniervorrichtung nach einem der vorangehenden Ansprüche, wobei jede Magnetreihe ein Halbach-Array bildet.

5. Planar-Positioniervorrichtung nach einem der vorangehenden Ansprüche, wobei der Flächenmaßstab direkt auf mindestens einem Abschnitt der Magnet- oder der Spulenanordnung aufgelegt ist, aus einem das Magnetfeld zwischen Stator und Läufer nicht beeinflussenden Material besteht und ihm Haltemittel zur Gewährleistung einer über seine gesamte Erstreckung zum Läufer und Stator parallelen Konfiguration zugeordnet sind.

6. Planar-Positioniervorrichtung nach Anspruch 5, wobei der Flächenmaßstab sich mindestens über den größeren Teil der Fläche des Läufers oder Stators und/oder über eine Vielzahl von Fenstern im Läufer oder Stator erstreckt.

7. Planar-Positioniervorrichtung nach Anspruch 5 oder 6,
wobei der Flächenmaßstab aus einem Material und mit einer Dicke gefertigt ist, das/die eine hohe Eigensteifigkeit gewährleistet.

8. Planar-Positioniervorrichtung nach einem der Ansprüche 5 bis 7, wobei der Flächenmaßstab aus Glas, Insbesondere gehärtetem Glas, oder einer Aluminiumlegierung großer Härte gefertigt ist.

9. Planar-Positioniervorrichtung nach einem der Ansprüche 5 bis 8, wobei der Flächenmaßstab eine Dicke zwischen 0,5 und 3 mm aufweist.

10. Planar-Positioniervorrichtung nach einem der Ansprüche 5 bis 9, wobei der Flächenmaßstab so am Läufer angebracht ist, dass er an Stegen abgestützt ist, die am Läufer zwischen Magnetreihen vorgesehen sind.

11. Planar-Positioniervorrichtung nach einem der Ansprüche 5 bis 10, wobei die Haltemittel eine Spanneinrichtung zum tangentialen Spannen des Flächenmaßstabs in beide Erstreckungsrichtungen des Läufers oder Stators aufweisen.

12. Planar-Positioniervorrichtung nach einem der Ansprüche 5 bis 11, wobei die Haltemittel eine Klebstoffverbindung zwischen dem Flächenmaßstab und demjenigen des Läufers oder Stators, auf den er aufgelegt ist, insbesondere mit am Läufer vorgesehenen Stegen und/oder Abstützpunkten, umfassen.

13. Positioniertisch mit einer Planar-Positioniervorrichtung nach einem der vorangehenden Ansprüche, Halte- und Führungsmitteln für die Planar-Positioniervorrichtung und einer Objekthalterung zum Halten eines zu positionierenden Objekts.

14. Bearbeitungsanordnung, insbesondere Werkzeugmaschine, mit einem Positioniertisch nach Anspruch 13.

15. Messanordnung mit einem Positioniertisch nach Anspruch 13.

## Claims

1. A planar positioning apparatus (10), comprising
a stator (19) which comprises a coil arrangement (11) consisting of flat coils (11a, 11b), a rotor (13) which is arranged opposite the stator in the operating state of the positioning apparatus and which has a planar magnet arrangement (12) comprising a plurality of rows of magnets, wherein the plane which is spanned by the planar magnet arrangement is arranged parallel to the plane of the coil arrangement,
a position measuring head (8), which is arranged within the stator or rotor in the operating state of the positioning apparatus, for detecting the position of the rotor relative to the stator,
an area scale (17) which is fixed to the rotor or the stator in a specific position,
and an evaluation and control device for evaluating position signals of the position measuring head and for controlling the application of current to the coil arrangement for controlling the position of the rotor with respect to the stator,
wherein the stator or the rotor has at least one window (6, 16) for making the area scale visible for the position measuring head, and the area scale extends beyond the window between the coil and magnet arrangement,
wherein the rotor comprises a chessboard-like arrangement of fields of rows of magnets (12a - 12d) each having a square contour and uniform polarization of all of the magnets in one field and mutually perpendicular polarization of the adjacent fields, and in each case a separating web (12e - 12h) is formed between adjacent fields,
**characterized in that**
- two rows of magnets that are adjacent diagonally opposite are offset from one another such that
- two of the opposite boundary edges extending in the same direction are aligned with one another,
- whereas the two other opposite boundary edges extending in the same direction have an offset of the triple amount of the web width, so that two consecutive boundary webs extending in the same direction always have a lateral offset by the amount of the web width.

2. Planar positioning apparatus according to claim 1, wherein the rotor has four square rows of magnets in a chessboard arrangement, and the aligned boundary edges intersect at a central point of intersection.

3. Planar positioning apparatus according to any one of claims 1 to 3, wherein the rows of magnets substantially cover the central area of the rotor.

4. Planar positioning apparatus according to any one of the preceding claims, wherein each row of magnets forms a Halbach array.

5. Planar positioning apparatus according to any one of the preceding claims, wherein the area scale is placed directly on at least one section of the magnet arrangement or coil arrangement, is formed of a material which does not influence the magnetic field between the stator and the rotor, and has associated holding means for ensuring a parallel configuration over its entire extension in relation to the rotor and stator.

6. Planar positioning apparatus according to claim 5, wherein the area scale extends at least over the major part of the rotor or stator surface and/or over a plurality of windows in the rotor or stator.

7. Planar positioning apparatus according to any one of claims 5 or 6, wherein the area scale is manufactured from a material and having a thickness which ensure high inherent rigidity.

8. Planar positioning apparatus according to any one of claims 5 to 7, wherein the area scale is manufactured from glass, in particular tempered glass or an aluminum alloy of high hardness.

9. Planar positioning apparatus according to any one of claims 5 to 8, wherein the area scale has a thickness of between 0.5 and 3 mm.

10. Planar positioning apparatus according to any one of claims 5 to 9, wherein the area scale is mounted to the rotor such as to be supported at webs provided on the rotor between rows of magnets.

11. Planar positioning apparatus according to any one of claims 5 to 10, wherein the holding means comprise a clamping device for tangentially clamping the area scale in both extension directions of the rotor or stator.

12. Planar positioning apparatus according to any one of claims 5 to 11, wherein the holding means comprise an adhesive bonding between the area scale and that of the rotor or stator, upon which it is placed, in particular to webs and/or supporting points provided on the rotor.

13. Positioning table having a planar positioning apparatus according to any one of the preceding claims, holding and guiding means for the planar positioning apparatus, and an object holder for holding an object to be positioned.

14. Processing arrangement, in particular machine tool, having a positioning table according to claim 13.

15. Measuring arrangement having a positioning table according to claim 13.

## Revendications

1. Dispositif de positionnement planaire (10), comportant
un stator (19) qui comprend un agencement (11) de bobines plates (11a, 11b), un rotor (13) qui est disposé en face du stator dans la position de fonctionnement du dispositif de positionnement et qui présente un agencement d'aimants planaire (12) constitué de plusieurs rangées d'aimants, le plan défini par l'agencement d'aimants planaire étant disposé parallèlement au plan de l'agencement de bobines,
une tête de mesure de position (8) disposée à l'intérieur du stator ou du rotor dans la position de fonctionnement du dispositif de positionnement pour détecter la position du rotor par rapport au stator,
une échelle de surface (17) fixée sur le rotor ou le stator dans une position précise,
et un dispositif d'évaluation et de commande pour évaluer des signaux de position de la tête de mesure de position et pour commander une alimentation en courant de l'agencement de bobines pour la commande de position du rotor par rapport au stator,
dans lequel
le stator ou le rotor présente au moins une fenêtre (6, 16) pour la visualisation de l'échelle de surface pour la tête de mesure de position et l'échelle de surface s'étend au-delà de la fenêtre entre l'agencement de bobines et l'agencement d'aimants,
le rotor comprend un arrangement en forme de damier de champs de rangées d'aimants (12a - 12d) ayant chacun un contour carré et une polarisation uniforme de tous les aimants dans un champ et une polarisation en alternance mutuellement perpendiculaire des champs voisins, et une barrette de séparation respective (12e - 12h) étant formée entre des champs voisins,
**caractérisé en ce que**
- deux rangées d'aimants diagonalement adjacentes et opposées sont décalées l'une par rapport à l'autre de telle sorte que
- deux des arêtes de délimitation opposées s'étendant dans la même direction sont alignées l'une avec l'autre,
- tandis que les deux autres arêtes de délimitation opposées s'étendant dans la même direction ont un décalage de trois fois la valeur de la largeur de la barrette, de sorte que deux barrettes de délimitation adjacentes s'étendant dans la même direction ont toujours un décalage latéral de la valeur de la largeur de la barrette.

2. Dispositif de positionnement planaire selon la revendication 1,
dans lequel
le rotor comprend quatre rangées d'aimants carrées arrangées en damier, et les arêtes de délimitation alignées l'une avec l'autre se recoupent à un point de croisement central.

3. Dispositif de positionnement planaire selon l'une des revendications 1 à 2,
dans lequel
les rangées d'aimants recouvrent sensiblement la zone centrale du rotor.

4. Dispositif de positionnement planaire selon l'une des revendications précédentes,
dans lequel
chaque rangée d'aimants forme un réseau de Halbach.

5. Dispositif de positionnement planaire selon l'une des revendications précédentes,
dans lequel
l'échelle de surface est posée directement sur au moins une portion de l'agencement d'aimants ou de bobines, elle est constituée d'un matériau qui n'influence pas le champ magnétique entre le stator et le rotor, et des moyens de retenue sont associés à ladite échelle de surface pour assurer, sur toute son extension, une configuration parallèle au rotor et au stator.

6. Dispositif de positionnement planaire selon la revendication 5,
dans lequel
l'échelle de surface s'étend au moins sur la majeure partie de la surface du rotor ou du stator et/ou sur une multitude de fenêtres dans le rotor ou dans le stator.

7. Dispositif de positionnement planaire selon la revendication 5 ou 6,
dans lequel
l'échelle de surface est fabriquée en un matériau et avec une épaisseur de manière à assurer une rigidité intrinsèque élevée.

8. Dispositif de positionnement planaire selon l'une des revendications 5 à 7,
dans lequel
l'échelle de surface est fabriquée en verre, en particulier en verre durci, ou en un alliage à base d'aluminium de grande dureté.

9. Dispositif de positionnement planaire selon l'une des revendications 5 à 8,
dans lequel
l'échelle de surface présente une épaisseur entre 0,5 et 3 mm.

10. Dispositif de positionnement planaire selon l'une des revendications 5 à 9,
dans lequel
l'échelle de surface est rapportée sur le rotor de manière à prendre appui sur des barrettes prévues sur le rotor entre des rangées d'aimants.

11. Dispositif de positionnement planaire selon l'une des revendications 5 à 10,
dans lequel
les moyens de retenue présentent un dispositif de serrage pour serrer tangentiellement l'échelle de surface dans les deux directions d'extension du rotor ou du stator.

12. Dispositif de positionnement planaire selon l'une des revendications 5 à 11,
dans lequel
les moyens de retenue comprennent une liaison de colle entre l'échelle de surface et celui parmi le rotor ou le stator sur lequel elle est posée, en particulier ayant des barrettes et/ou des points d'appui sur le rotor.

13. Table de positionnement comportant un dispositif de positionnement planaire selon l'une des revendications précédentes, des moyens de retenue et de guidage pour le dispositif de positionnement planaire et un support d'objet pour retenir un objet à positionner.

14. Ensemble d'usinage, en particulier machine-outil, comportant une table de positionnement selon la revendication 13.

15. Ensemble de mesure comportant une table de positionnement selon la revendication 13.
